# EUROPEAN PATENT SPECIFICATION

(11) **EP 0 423 997 B1**
(45) Date of publication and mention of the grant of the patent: **02.03.1994**
(21) Application number: 90310984.1
(22) Date of filing: 08.10.1990
(51) Int. Cl.: B60C 15/06, B60C 15/00

(54) **Pneumatic tyre**
Luftreifen
Bandage pneumatique

(30) Priority: 11.10.1989 JP 264586/89
(43) Date of publication of application: 24.04.1991
(73) Proprietor: SUMITOMO RUBBER INDUSTRIES LIMITED, Fukiai-ku Kobe-shi Hyogo (JP)
(72) Inventor: Ueyoko, Kiyoshi, Higashinari-ku, Osaka-shi, Osaka-fu (JP); Miura, Katsuhito, Nishinomiya-shi, Hyogo-ken (JP); Yoshikawa, Hideaki, Tarumi-ku, Kobe-shi, Hyogo-ken (JP)
(74) Representative: Stewart, Charles Geoffrey

(56) References cited:
- EP-A- 0 323 208
- DE-A- 2 611 482
- FR-A- 2 483 854
- GB-A- 2 218 676
- US-A- 4 705 091

## Description

The present invention relates to a pneumatic tyre for high speed and heavy duty use, in which durability is improved by reducing bead deformation and internal heat generation.

In order to improve tyre structural durability and vehicle's running performance, fuel consumption performance and the like, radial ply constructions have been used in various vehicles especially in passenger cars.

However, in the field of high speed heavy duty tyres - such as aircraft tyres - radial ply constructions have only recently come into use.

Aircraft tyres are required to have superior durability in comparison with tyres in any other field because of their especially severe service conditions such as high inner pressure, heavy load and high speed.

Aircraft tyres are subjected to an extremely heavy load when landing and taking-off which causes bending deformation it, the bead portions and the accompanying stress is apt to cause ply edge looseness, failure and/or ply separation failure in the bead regions. The percentage of such failures is particularly high in comparison with tyres in other fields.

As a countermeasure to control the bending deformation of the bead portions of such a radial tyre, it has been suggested to increase the rigidity of the bead portion by increasing the hardness and/or volume of the bead apex rubber and by providing organic or inorganic fibre cord reinforcing layers.

For example FR-A-2483854 discloses a giant radial tyre for use under heavy load on off-road vehicles which is provided with a durable bead portion construction in which the outer coating rubber of the bead portion has a thickness distribution satisfying a specific condition related to the maximum and minimum thicknesses of rubber in the bead portion, a bead portion reference width and the ratio of the heel width to the maximum width of the tyre.

However such measures do not sufficiently reduce the internal heat generation caused by the bending deformation and therefore do not prevent these failures.

It is an object of the present invention to provide a high-speed heavy-duty tyre in which the bead portions are effectively prevented from being damaged.

According to one aspect of the present invention, a pneumatic tyre for high-speed and heavy-duty comprises a pair of bead cores disposed one in each bead portion, a carcass of a radial construction extending between the bead portions and turned up around the bead cores, a tread and sidewalls disposed outside the carcass to form a rubber layer, a belt layer disposed radially outside the carcass and inside the tread, wherein when the tyre is mounted on its regular rim and inflated to normal inner pressure, the ratio F1/X of the thickness F1 of the said rubber layer measured at a point Q perpendicularly to the carcass to the axial distance X of the axially inner edge of the bead core from a bead heel point P is not more than 0.20, where the point Q is on the outside of the rubber layer, and the radial distance L of the point Q is 0.2 times the tyre section height H, both measured from the bead heel P.

The effect of the invention was shown by the inventors as now follows.

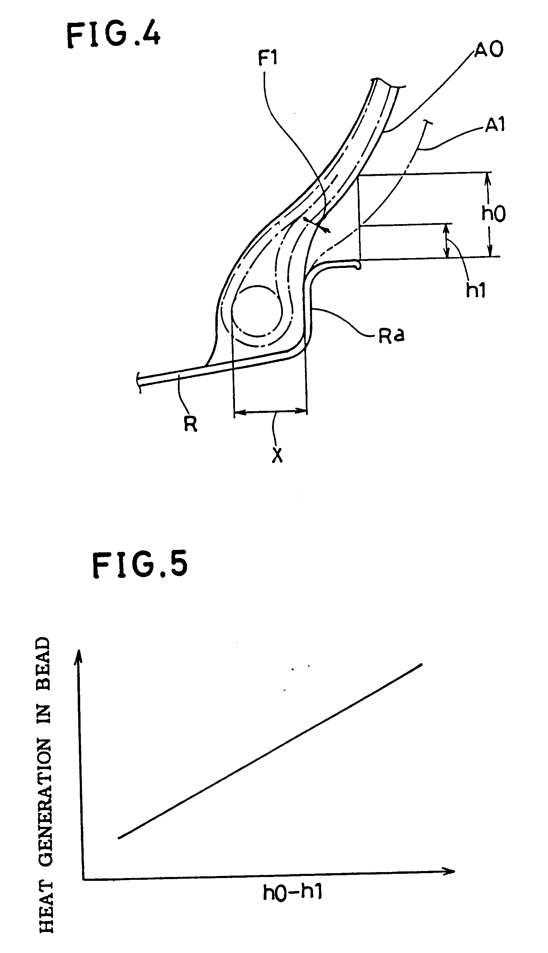

Considering the tyre bead shown in Figure 4, which shows the condition of a tyre mounted on its regular rim R and inflated to its normal inner pressure, the bead profile A1 when the tyre is loaded with a normal load always takes up substantially the same shape irrespective of the bead profile AO when the tyre is not loaded.

The smaller the bead deformation (hO-h1) which occurs the lower the internal heat generation. In other words, the amount of generated heat and the resultant bead temperature is in direct proportion to the bead deformation (h0-h1) for tyres identical in size and construction as shown in Figure 5. In Figure 5 h0 is the radial distance from the radially outer edge of the rim flange Ra to the point of intersection between the bead profile AO and a normal line drawn from the axially outer edge of the rim flange Ra, and h1 is the radial distance from the radially outer edge of the rim flange Ra to the point of intersection between the bead profile A1 and the above-mentioned normal line.

The carcass profile is optimised by decreasing the thickness F1 of the rubber layer on the outside of the carcass measured at a point Q spaced apart radially outwardly from the bead heel by the distance of 0.2 times the tyre section height H, and thereby it becomes possible to shift the inflection point of the carcass profile downwards which point exists between a portion which moves towards the axially outside when inflated to as to hang over the rim flange and a relatively stable under portion thereof.

However, the height of the above-mentioned inflection point also has a close relationship to the axial distance X between the inner edge of the bead core and the bead heel. By limiting the ratio F1/X of the rubber thickness F1 to the distance X within the specific range, the location of the inflection point of the carcass formed by tyre inflation is shifted downwards to decrease the distance h0. Accordingly, the bending deformation (h0-h1) of the bead portion is decreased because the distance h1 is substantially constant so that the bending stress and resultant internal heat generation are effectively reduced. As a further advantage the decreased rubber thickness reduces still more the heat generation and the heat retention in the rubber layer itself. Therefore, bead failure is effectively prevented by the invention.

An embodiment of the present invention will now be described in detail, by way of example only, with reference to the accompanying drawings, in which:
Figure 1 is a sectional view showing an embodiment of the present invention;
Figure 2 is an enlarged sectional view showing the bead portion thereof;
Figure 3 is a diagram showing a relationship between the F1/X ratio and heat generation;
Figure 4 is a diagram explaining the bending deformation of a bead portion; and
Figure 5 is a diagram showing the relationship between bead deformation (h0-h1) and bead temperature.

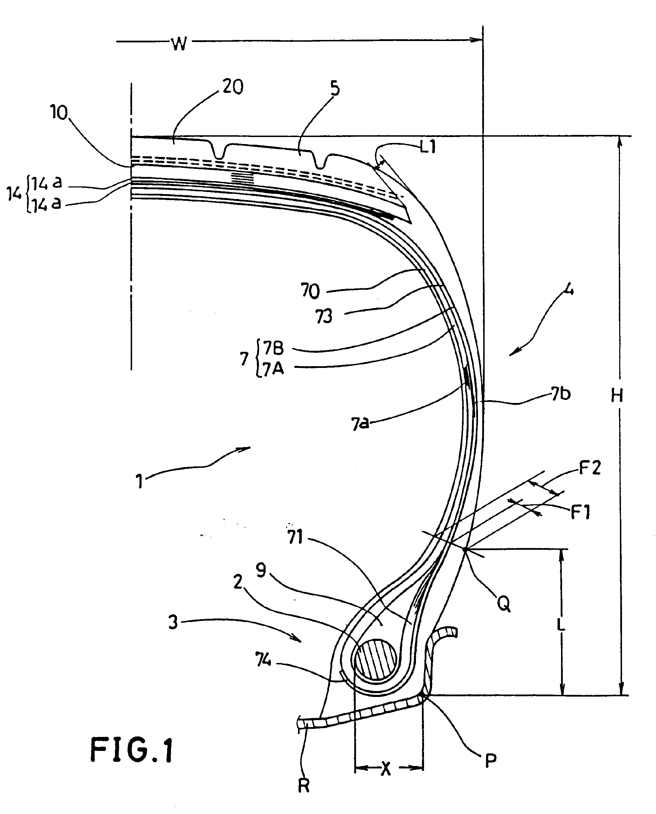

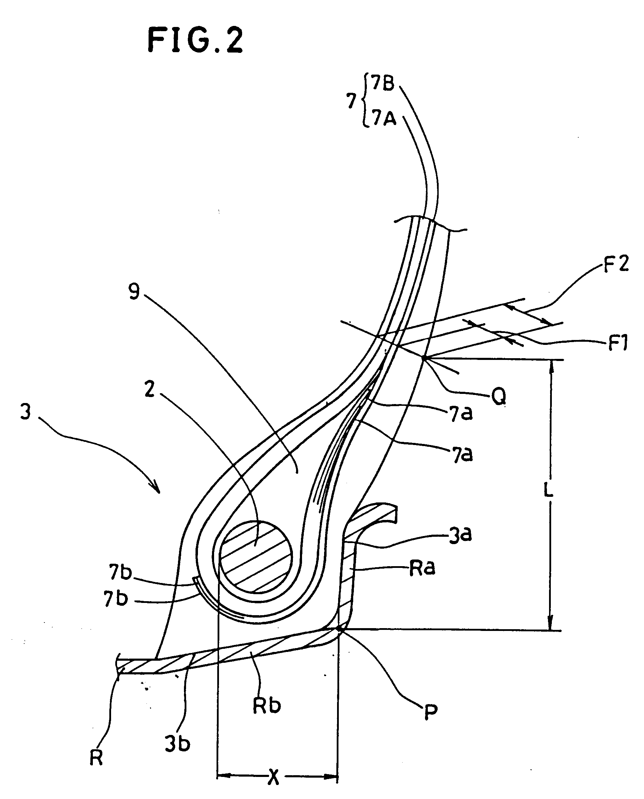

In Figures 1 and 2, a tyre 1 of the present invention is an aircraft radial tyre of size 46X17R20, mounted on its regular rim R and inflated to its normal pressure.

The tyre has a pair of bead portions 3, a sidewall extending radially outwardly from each bead portion, and a tread extending between the radially outer edges of the sidewalls.

The tyre comprises a pair of bead cores 2 disposed one in each bead portion 3, a carcass 7 having a plurality of plies of cords extending between the bead portions 3 and turned up around each bead core 2, and a belt layer 10 disposed between the carcass and a rubber tread 5.

The carcass cords in each ply are arranged radially of the tyre at an angle of 70 to 90 degrees with respect to the tyre equator and in this case the carcass 7 is composed of two layers, an inner layer 7A and an outer layer 7B. The inner 7A is composed of plural plies 7a (in this example, 4 plies) turned up around the bead cores 2 from the axially inside to the outside thereof. The outer layer 7B is composed of plural plies 7b (in this example, 2 plies) turned up around the bead cores 2 reversely from the axially outside to the inside thereof so as to wrap the turned up part of the inner layer 7A therein.

Thus, each carcass ply 7a is provided with two turned up portions 71 axially outside the toroidal main portion 70 thereof, and also each carcass ply 7b is provided with two reversely turned up portions 74 axially inside the toroidal main portion 73 thereof. With respect to the tyre equator, the carcass plies are inclined alternately in the radial direction of the tyre so that the adjacent plies are crossed to each other.

For the inner and outer carcass plies 7a and 7b, organic fibre cords are used in this example, and for the organic fibre cord, rayon, polyester, vinylon, nylon, aromatic polyamide or the like may be used.

The above-mentioned belt layer 10 is composed of plural plies 10a of cords, 8 plies in this example.

A cut breaker layer 14 is disposed between the carcass 7 and the above-mentioned belt layer 10 in contact with the belt layer. The cut breaker layer 14 is composed of plural plies 14a of cords, 2 plies in this example.

The cut breaker 14 is kept in contact with the carcass in the tread crown region 20, but out of this region the layer is spaced apart from the carcass gradually towards its edges, and the edges are terminated at such positions that the axial width thereof is in the range of 65 to 85%, preferably 70 to 78% of the tyre section width W.

The edges of the belt layer 10 are extended axially outwards beyond the edges of the cut breaker layer, and the ply edges are aligned obliquely but in parallel with the tyre outer surface. The belt width is in the range of 70 to 85% of the tyre maximum section width W, and the minimum distance L1 from the belt edge to the tyre outer surface is in the range of 3 to 15 mm.

The cords of the belt plies 10a are high extensibility elastic cords and are laid at 0 to 20 degrees to the tyre equator.

According to the present invention, the thickness of the rubber layer on the outside of the carcass 7 is set in a special manner such that the ratio F1/X of the rubber thickness F1 at the point Q on the tyre outer surface in the bead region to the axial distance X of the innermost end of the bead core from the bead heel point P is not more than 0.20 but more than 0, wherein the rubber thickness F1 is measured from the point Q to the outside of the carcass perpendicularly to the outside of the carcass, the point Q is spaced apart radially outwardly of the tyre by a distance L from a bead heel point P, the distance L is 0.2 times the section height H of the tyre when inflated to its normal pressure, and the bead heel point p is defined as an imaginary point of intersection between extensions of the bead bottom face 3b contacting with the bead seat Rb of the rim R and the bead side face 3a contacting with the flange Ra of the rim R, as shown in Figure 2.

The value of this was proved by various tests made by the inventors. They found that by decreasing the rubber thickness F1 at the point Q, the carcass profile in a region around the point Q was optimised so as to decrease the height of the inflection point in overhanging motion of the inflated carcass.

They also found that if the distance X was too small, a portion 71 of the carcass located axially outside the bead core was made more parallel to the radial direction, and as a result the height of the above-mentioned inflection point was increased.

Preferably the ratio F1/X should be limited to the range of not less than 0.12 and not more than 0.18.

By decreasing the F1/X ratio into the above-mentioned specific range, the amount of bead deformation is decreased to about 15% of the tyre section height H, whereas that in the prior art is 20-23%.

The decrease in bead deformation (h0-h1) can lessen stress due to bending and the resultant heat generation due to deformation, and bead damage can be greatly reduced in co-operation with the effect of the decreased rubber thickness F1 to decrease deformation and heat generation and accumulation of heat in the tyre rubber layer.

In this embodiment, further, the ratio F2/X of the whole thickness F2 of the tyre at the point Q, inclusive of the thickness of the carcass and inner liner and the like to the above-mentioned distance X is limited to be in the range of not more than 0.60 and of course more than 0, more preferably it is in a narrow range of not less than 0.45 and not more than 0.58, wherein the rubber thickness F2 is measured perpendicularly to the outside of the carcass from the point Q, whereby the bead heat generation is further lessened.

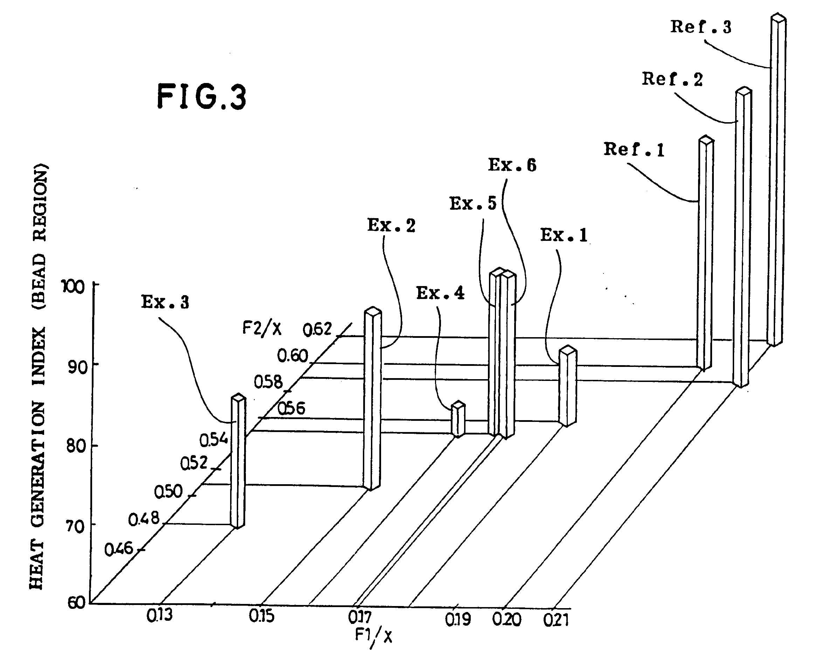

Test tyres of size 46X17R20 for jumbo size airplanes having the tyre construction shown in Figure 1 and specifications given in Table 1 were prepared and subjected to comparison tests, which were 50 times High-speed Taking-off tests according to the method specified by Technical Standard Order TSO-C62c of The Federal Aviation Administration in the U S A. The measured bead temperatures are shown as heat generation indexes in Figure 3.

Figure 3 shows that the bead temperatures of the working example tyres were remarkably decreased by the specifically limited F1/X ratio in comparison with those of the reference tyres, and such improvements were enhanced by further limiting the F2/X ratio within the specific range.

As described above in the high-speed heavy-duty tyre of the present invention, the ratio F1/X of the rubber thickness F1 at the point Q to the bead core distance X is set to be not more than 0.20. As a result, bead deformation and heat generation are effectively reduced without sacrificing the running performance, and further the possibility of bead damage occurring is greatly reduced. Such effects are obtained by changing the rubber thickness and bead core location without changing the tyre inside construction or the reinforcing layers' constructions.

## Claims

1. A pneumatic tyre for high speed and heavy duty comprising a pair of bead cores (2) disposed one in each bead portion (3), a carcass (7) of a radial construction extending between the bead portions (3) and turned up around the bead cores (2), a tread (5) and sidewalls (4) disposed outside the carcass (7) to form a rubber layer, a belt layer (10) disposed radially outside the carcass (7) and inside the tread (5), characterised in that when the tyre is mounted on its regular rim and inflated to normal inner pressure, the ratio (F1/X) of the thickness (F1) of the said rubber layer measured at a point (Q) perpendicularly to the carcass to the axial distance (X) of the axially inner edge of the bead core from a bead heel point (P) is not more than 0. 20, where the point (Q) is on the outside of the rubber layer, and the radial distance (L) of the point (Q) is 0.2 times the tyre section height (H), both measured from the bead heel (P).

2. A tyre according to claim 1 characterised in that the ratio (F2/X) of the whole thickness F2 of the tyre measured at said point (Q) perpendicularly to the carcass (7) to said axial distance (X) is not more than 0.60.

## Patentansprüche

1. Ein Luftreifen für hohe Geschwindigkeit und Schwereinsatz mit einem Paar von Wulstkernen (2), von denen einer in jedem Wulstabschnitt (3) angeordnet ist, einer Karkasse (7) radialen Aufbaus, die sich zwischen den Wulstabschnitten (3) erstreckt und um die Wulstkerne (2) herum umgeschlagen ist, einer Lauffläche (5) und Seitenwänden (4), die außerhalb der Karkasse (7) angeordnet sind, um eine Gummischicht zu bilden, einer Gürtelschicht (10), die radial außerhalb der Karkasse (7) und innerhalb der Lauffläche (5) angeordnet ist,
dadurch **gekennzeichnet,**
daß, wenn der Reifen auf seiner regulären Felge angebracht und auf normalen Innendruck aufgepumpt ist, das Verhältnis (F1/X) der Dicke (F1) der Gummischicht, gemessen an einem Punkt (Q) senkrecht zur Karkasse, zum axialen Abstand (X) des axial inneren Rands des Wulstkerns von einem Wulstfersenpunkt (P) nicht mehr als 0.20 beträgt, wobei der Punkt (Q) sich auf der Außenseite der Gummischicht befindet, und der radiale Abstand (L) des Punkts (Q) das 0.2-fache der Reifenquerschnittshöhe (H) beträgt, beides von der Wulstferse (P) aus gemessen.

2. Ein Reifen nach Anspruch 1,
dadurch **gekennzeichnet**,
daß das Verhältnis (F2/X) der gesamten Dicke F2 des Reifens, gemessen am Punkt (Q) senkrecht zur Karkasse (7), zum axialen Abstand (X) nicht mehr als 0.60 beträgt.

## Revendications

1. Pneumatique pour poids lourds et vitesses élevées, comprenant une paire de tringles (2) disposées chacune dans une partie de talon (3), une carcasse (7) de construction radiale disposée entre les parties de talon (3) et repliée autour des tringles (2), une bande de roulement (5) et des flancs (4) disposés à l'extérieur de la carcasse (7) pour la formation d'une couche de caoutchouc, une couche de ceinture (10) disposée radialement à l'extérieur de la carcasse (7) et à l'intérieur de la bande de roulement (5), caractérisé en ce que, lorsque le pneumatique est monté sur la jante normale et est gonflé à sa pression interne normale, le rapport (F1/X) de l'épaisseur (F1) de la couche de caoutchouc mesurée en un point (Q) qui se trouve, perpendiculairement à la carcasse, à la distance axiale (X) du bord axialement interne du talon par rapport au point (P) de coin ne dépasse pas 0,20, le point (Q) étant à l'extérieur de la couche de caoutchouc, et la distance radiale (L) du point (Q) est égale à 0,2 fois la hauteur (H) de la section du pneumatique, ces deux valeurs étant mesurées depuis le coin (P) du talon.

2. Pneumatique selon la revendication 1, caractérisé en ce que le rapport (F2/X) de l'épaisseur totale (F2) du pneumatique mesurée audit point (Q) perpendiculairement à la carcasse (7) à la distance axiale (X) ne dépasse pas 0,60.
